# DEMANDE DE BREVET EUROPEEN

(11) **EP 1 132 872 A1**
(43) Date de publication de la demande: **12.09.2001**
(21) Numéro de dépôt: 01400468.3
(22) Date de dépôt: 22.02.2001
(51) Int. Cl.: G07F 7/06, G07F 11/62

(54) **Dispositif d'entreposage et de mise à disposition de bouteilles de gaz**

(30) Priorité: 10.03.2000 FR 0003124
(71) Demandeur: L'AIR LIQUIDE, SOCIETE ANONYME POUR L'ETUDE ET L'EXPLOITATION DES PROCEDES GEORGES CLAUDE, 75007 Paris (FR); L'AIR LIQUIDE S.A., 75321 Paris Cédex 07 (FR)
(72) Inventeur: Mc Cord, Anthony, 75321 Paris Cedex 07 (FR); Pic, Pierre, 13505 La Ciotat Cedex 08 (FR); Le Nevez, Pierre, 13505 La Ciotat Cedex 08 (FR)
(74) Mandataire: Le Moenner, Gabriel

(57) **Abrégé**

Le dispositif comprend au moins une armoire (A) comportant plusieurs compartiments de réception de bouteilles constitués chacun par une partie de gouttière sensiblement hemi-cylindrique (5) et une partie d'accès (6) convergeant vers la partie de gouttière et débouchant dans la face avant de l'armoire en étant obturable par une porte (13) munie d'un verrou (15) commandé par un module de transaction (B).

Application à la distribution de bouteilles de gaz industriels sur site.

## Description

La présente invention concerne les dispositifs d'entreposage et de mise à disposition de bouteilles de gaz.

Dans les dispositifs connus, les bouteilles de gaz sont, en général, entreposées verticalement. II a toutefois été proposé d'entreposer les bouteilles horizontalement dans des dispositifs de distribution à gravité ou à casiers ou tapis mobiles. Ces types de dispositifs sont encombrants, de mise en oeuvre délicate et fragile et ne conviennent pas, de façon pratique, à des petites ou moyennes bouteilles.

La présente invention a pour objet de proposer un dispositif de configuration simple, robuste, modulaire et versatile, de faibles coûts de fabrication et de revient, et convenant à un grand nombre d'utilisations.

Pour ce faire, l'invention propose un dispositif d'entreposage et de mise à disposition de bouteilles de gaz, comprenant au moins une armoire ayant une face avant et comportant au moins une paire de compartiments débouchant dans la face avant et associés à des moyens de contrôle d'accès sélectifs, chaque compartiment étant constitué par une partie de gouttière sensiblement hémi-cylindrique et une partie d'accès à profil convergeant vers la partie de gouttière.

Selon d'autres caractéristiques plus particulières de l'invention :
- chaque compartiment est muni d'une porte à verrou
- au moins la partie d'accès, et typiquement également au moins une partie de la porte, sont réalisées en matériau plastique ou amagnétique
- chaque compartiment est équipé d'un détecteur de présence de bouteille et/ou de lecture d'informations portées par la bouteille.

D'autres caractéristiques et avantages de la présente invention ressortiront de la description suivante d'un mode de réalisation, donné à titre illustratif mais nullement limitatif, faites en relation avec les dessins annexés, sur lesquels :
- la figure 1 est une vue schématique en perspective d'un mode de réalisation d'un dispositif autonome d'entreposage et de mise à disposition de bouteilles de gaz selon l'invention ; et
- figure 2 est une vue schématique en coupe verticale d'une armoire du dispositif de la figure 1.

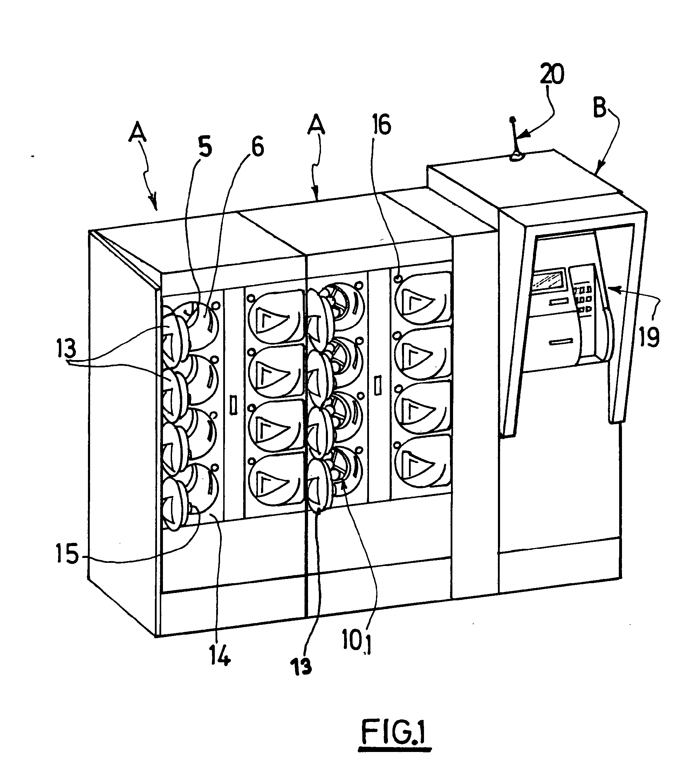

Dans le mode de réalisation représenté sur la figure 1, un dispositif selon l'invention, comprend deux armoires adjacentes d'entreposage et de mise à disposition A, comprenant typiquement deux rangées verticales de 4 compartiments pour bouteilles, et une armoire B, également avantageusement adjacente, constituant un module de transaction.

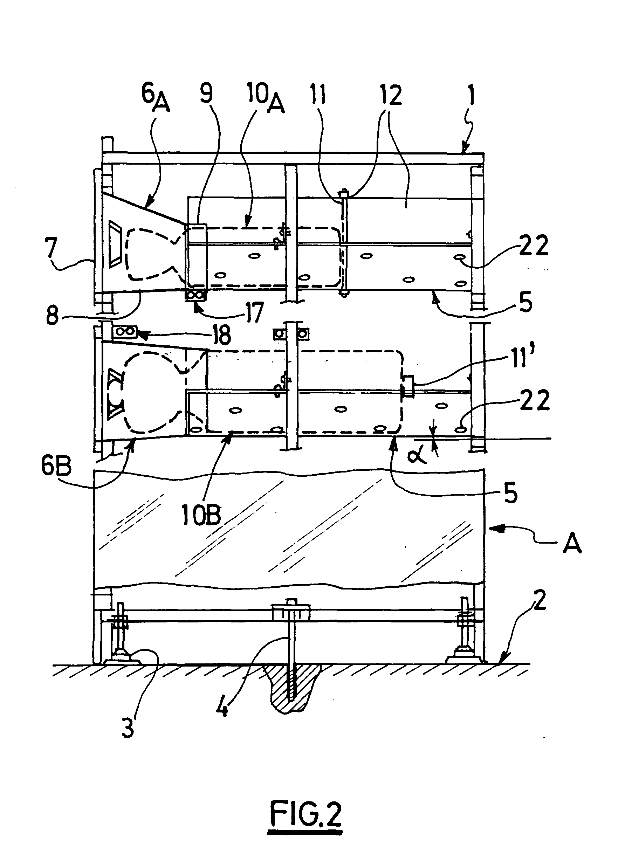

Dans le mode de réalisation représenté, chaque armoire A comporte un châssis porteur croisillonné 1 prenant appui sur le sol 2 par des pieds réglables 3 et ancré dans le sol par un tirant 4. L'armoire A renferme typiquement deux séries verticales de compartiments récepteurs formés chacun par une partie de gouttière 5 montée dans le châssis 1 et une partie d'accès avant 6 débouchant sur la face avant de l'armoire A. La partie de gouttière 5 est constituée typiquement d'au moins une gouttière hemi-cylindrique, le cas échéant, comme représenté en haut sur la figure 2, de deux demi-coquilles hemi-cylindriques assemblées le long des génératrices, tandis que la partie d'accès 6 est constituée d'une pièce moulée généralement tronconique présentant, à partir d'une plaque avant de montage 7, un profil convergeant vers l'arrière 8 se terminant par une extrémité arrière sensiblement cylindrique 9 s'étendant dans la partie avant de la partie de gouttière 5.

Pour accommoder différentes tailles de bouteilles et de chapeaux de bouteilles, comme figuré par les contours en traits mixtes 10a et 10b sur la figure 2, la partie de gouttière 5 comporte un moyen de butée réglable s'étendant transversalement, pour positionner en butée la bouteille dans le compartiment. La butée est constituée par exemple par une tige filetée 11 montée dans l'un d'une série de trous diamétralement opposés 12 formés dans la partie de gouttière 5 et prévus à des endroits précis le long de génératrices de cette dernière, ou par une traverse 11' fixée à l'endroit adéquat sur la gouttière. Dans le même esprit, selon un aspect de l'invention, la partie d'accès 6 est sélectionnée dans un groupe prédéterminé de parties d'accès, de formes adaptées aux différents bouteilles et chapeaux à entreposer, comme illustré par les deux pièces 6a et 6b sur la figure 2.

Pour garantir un bon positionnement de la bouteille 10 en butée par son fond sur l'organe de butée 11 et permettre le cas échéant à un constituant de s'accumuler par gravité dans le fond de la bouteille, les parties de gouttières 5 s'étendent vers le bas, à partir de la face avant, d'un angle α compris entre environ 3 et 15 degrés, suffisant pour surmonter la friction entre une bouteille 10 et le matériau de la partie de gouttière 5.

Comme on le voit sur la figure 1, chaque compartiment est obturable par une porte 13 montée articulée sur un panneau avant 14 recouvrant les panneaux 7 et fixé au châssis. Chaque porte 13 est munie d'une poignée, d'un verrou électromagnétique 15 et d'un joint d'étanchéité empêchant la pénétration de gouttes ou de salissures dans les compartiments. A chaque compartiment est associé au moins un voyant lumineux 16 indiquant la présence ou non d'une bouteille vide ou pleine dans le compartiment. Cette présence est détectée par au moins un capteur de présence de bouteille 17, par exemple, du type magnétique ou inductif ou, de préférence, par une antenne hyperfréquence 18 disposée à la périphérie de la partie d'accès 6 et capable de converser avec une puce électronique associée au chapeau de la bouteille 10. A cette fin, selon un aspect de l'invention, au moins la partie d'accès 6 est réalisée en matériau plastique moulé, par exemple en PTFE. Avantageusement, la porte 13 est également réalisée au moins en partie, en matériau plastique moulé. La gouttière 5 est avantageusement en tôle perforée d'orifices 22 de passage de fluides.

Avec un tel agencement, le module de transaction B, incluant en particulier un ensemble d'échange d'informations 19, comprenant un clavier, un écran d'affichage, une fente d'introduction de cartes d'identification et une fente de délivrance d'une fiche de transaction, et relié aux différents capteurs 17 et 18 et aux gâches des verrous 15, peut gérer de façon autonome les entrées/sorties de bouteilles individualisées en fonction des clients identifiés en étant relié, par des moyens filaires ou hertziens 20, à distance à une centrale de gestion des flux de bouteilles dans la zone de chalandise.

Le dispositif peut être ainsi disposé en tout lieu convenable pour mettre à disposition de clients de passage des bouteilles de gaz contenant un produit unique ou des produits appariés, par exemple de l'azote ou de l'argon d'une part, du propane ou du butane d'autre part, dans des armoires portant des identifications ou des couleurs adaptées en conséquence. En variante, les portes individuelles 13 peuvent être protégées par une robuste porte principale pour l'ensemble d'un module A, elle aussi munie d'un verrou électro-mécanique s'ouvrant, et donnant donc accès aux portes individuelles, lors de la reconnaissance d'un utilisateur autorisé, par exemple par une carte d'abonnement, par le module de transaction B.

## Revendications

1. Dispositif d'entreposage et de mise à disposition de bouteilles de gaz, comprenant au moins une armoire (A) ayant une face avant et comportant au moins une paire de compartiments débouchant dans la face avant et associés à des moyens de contrôle d'accès (13), chaque compartiment étant constitué par une partie de gouttière sensiblement hemi-cylindrique (5) et une partie d'accès (6) à profil convergeant vers la partie de gouttière.

2. Dispositif selon la revendication 1, **caractérisé en ce que** la partie d'accès (6) est interchangeable et fixée sur la face avant.

3. Dispositif selon l'une des revendications précédentes, **caractérisé en ce que** la partie de gouttière (5) comporte un moyen de butée réglable (11 ; 11').

4. Dispositif selon l'une des revendications précédentes, **caractérisé en ce que** la partie d'accès (6) est réalisée en matériau plastique.

5. Dispositif selon l'une des revendications précédentes, **caractérisé en ce que** chaque compartiment est équipé d'au moins un détecteur (17,18) de présence de bouteille.

6. Dispositif selon la revendication 4 et la revendication 5, **caractérisé en ce qu**'il comporte une antenne hyperfréquence (18) à la périphérie de la partie d'accès (6).

7. Dispositif selon l'une des revendications précédentes, **caractérisé en ce que** la partie de gouttière (5) est inclinée (α) par rapport à l'horizontale.

8. Dispositif selon l'une des revendications précédentes, **caractérisé en ce qu**'il comporte, pour chaque compartiment, une porte (13) munie d'un verrou (15).

9. Dispositif selon la revendication 8 , **caractérisé en ce que** les portes (13) sont articulées sur un panneau (14) monté sur la face avant.

10. Dispositif selon la revendication 8 ou la revendication 9, **caractérisé en ce que** les portes (13) sont réalisées au moins partiellement en matériau plastique.

11. Dispositif selon la revendication 5 et l'une des revendications 9 ou 10, **caractérisé en ce que** le panneau (14) comporte au moins un voyant lumineux (16) associé à chaque compartiment.

12. Dispositif selon l'une des revendications précédentes, **caractérisé en ce que** l'armoire (A) comprend au moins deux rangées de compartiments.

13. Dispositif selon la revendication 12, **caractérisé en ce que** l'armoire
(A) est associée à un module de transactions (B).
14.Dispositif selon la revendication 12, **caractérisé en ce que** le module de transactions (B) est équipé de moyens de télétransmission (20)
